Europäisches Patentamt

European Patent Office

Office européen des brevets

(19)

(11) **EP 1 251 681 A1**

(12) **EUROPÄISCHE PATENTANMELDUNG**

(43) Veröffentlichungstag:
**23.10.2002 Patentblatt 2002/43**

(51) Int Cl.⁷: **H04M 3/533**, H04M 3/537,
H04L 12/58

(21) Anmeldenummer: **01109765.6**

(22) Anmeldetag: **20.04.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(71) Anmelder: **SIEMENS AKTIENGESELLSCHAFT
80333 München (DE)**

(72) Erfinder:
• **Mitreuter, Ulrich, Dr.
82547 Eurasburg (DE)**
• **Zygan-Maus, Renate, Dr.
81477 München (DE)**

(54) **Koordinationsdienst für Benachrichtigungsmeldungen unterschiedlicher Mailserver**

(57)    Die Erfindung löst Koordinationsprobleme bezüglich der Benachrichtigung eines Teilnehmers über das Vorliegen von Mails in Mailboxen.

Der Telefonnetzbetreiber des Teilnehmers bietet mithilfe einer entsprechenden Diensteinrichtung (MWI-Koordinationsserver) einen Zusatzdienst für die Koordinierung von Benachrichtigungen "Message Waiting Indication" von unterschiedlichen Mailboxen an. Kommt in einer der beteiligten Mailboxen eine neue Nachricht für einen Teilnehmer an, so wird zunächst die besagte Diensteinrichtung davon durch eine MWI-Nachricht in Kenntnis gesetzt via SS7-Signalisierungsnetz.

Die Diensteinrichtung wertet die MWI-Nachrichten aus und benachrichtigt ihrerseits den Teilnehmer über die Teilnehmervermittlungsstelle.

EP 1 251 681 A1

## Beschreibung

In zunehmendem Maße werden von verschiedenen Service Providern Messaging Dienste angeboten. Beispiele sind Voicemail-, Faxmail- und Email-Dienste. Diese Dienste können entweder von dienstspezifischen Servern (z.B. Voicemailboxen, die heute schon von Telefonnetzbetreibern eingesetzt werden und Email-servern, die heute schon bei Internet Service Providern eingesetzt werden) oder neuerdings auch durch sogenannte Unified Messaging Server, die eine Mailbox für die unterschiedlichen Nachrichtentypen darstellen, realisiert werden. Ein Zusatzleistungsmerkmal solcher Server ist die Möglichkeit, dass ein Server den Dienstteilnehmer über den Eingang einer neuen Nachricht benachrichtigt. Dies kann auf unterschiedliche Weise geschehen.

Für den Fall, dass diese Benachrichtigung an ein Festnetztelefon erfolgt, hat ETSI einen Standarddienst (Message Waiting Indication) definiert, der von einigen Serverprodukten und Teilnehmervermittlungsstellen heute bereits unterstützt wird. Dazu sendet ein Server über ISDN-Signalisierung standardisierte Benachrichtigungsmeldungen (Anzeigemeldungen) ins Telefonnetz. Diese werden mithilfe des SS7-Signalisierungsnetzes bis zu der Teilnehmervermittlungsstelle geroutet und dort wird die Anzeige beim Endgerät gesteuert. Bei der Nutzung dieses Dienstes durch unterschiedliche, voneinander unabhängig arbeitende Server (z.B. durch die Voicemailbox seiner Telco und durch den Email-Server seines ISPs) ergeben sich Nutzungsprobleme für solche Teilnehmer, die nur ein normales Telefon ohne intelligente Anzeigefunktionen für diesen Dienst haben (in diesem Fall erfolgt die Benachrichtigung durch einen speziellen Stotterton, den die Teilnehmervermittlungsstelle anstelle des normalen Freitons anlegt). Ähnliche Probleme ergeben sich für solche Teilnehmer, deren Telefon nur mit einer einfachen Anzeigefunktion wie "Lampe an/aus - schalten" ausgestattet ist, die nur anzeigt ob eine Nachricht vorliegt oder nicht. In beiden Fällen kann der Teilnehmer nicht zwischen den Benachrichtigungen unterschiedlicher Server unterscheiden (z.B. Liegt eine Voicemail vor oder eine Email? Welchen Server muß ich abfragen?). Darüberhinaus kann, wenn Benachrichtigungen über neue Nachrichten von zwei oder mehreren Servern eingegangen sind, durch Rücksetzen der Anzeige beim Teilnehmer für Nachrichten eines dieser Server, die Benachrichtigungsinformation der anderen Server verloren gehen.

Wie wurde dieses Problem bisher gelöst?

I. Der Teilnehmer kann seine bisherigen Messagingdienst-Subskriptionen kündigen und zu einem Unified Messaging Dienstanbieter wechseln.
II. Der Teilnehmer kann ISDN subskribieren und sich ein intelligentes digitales Telefon kaufen, oder sein digitales Telefon mit einem PC-Programm koppeln.

Nachteile beider Lösungen sind: Kosten und Umstellungsaufwand beim Teilnehmer.

In welcher Weise löst Ihre Erfindung das angegebene technische Problem ?

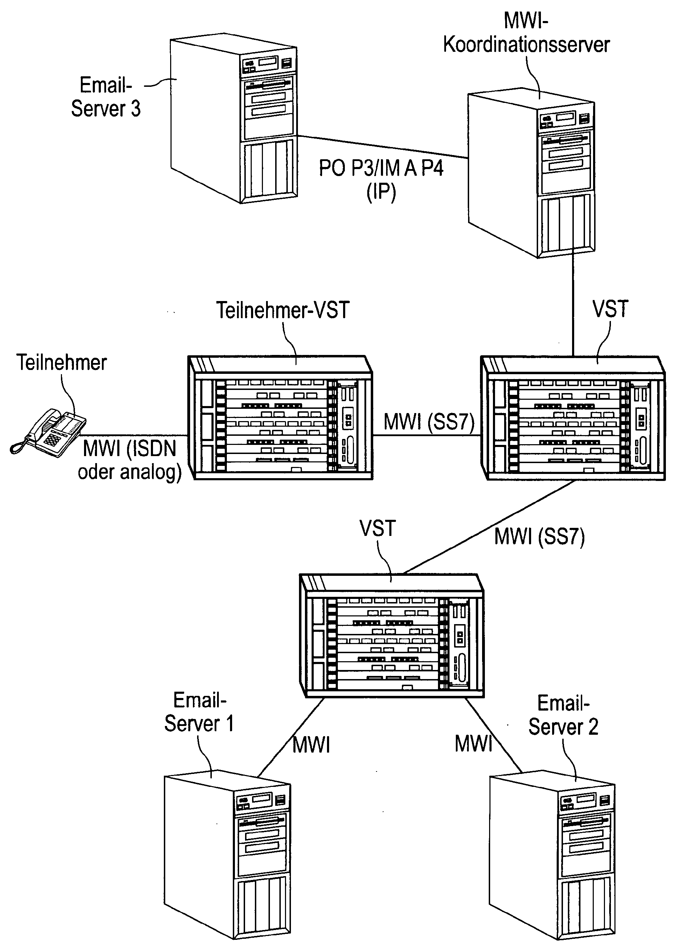

Der Telefonnetzbetreiber des Teilnehmers bietet mithilfe einer entsprechenden Diensteinrichtung (siehe MWI-Koordinationsserver in der Figur) einen Zusatzdienst für die Koordinierung der Standardbenachrichtigungen "Message-Waiting-Indication" von unterschiedlichen Mailboxen an. Der Teilnehmer gibt jedem Mail-Service-Provider als die Telefonnummer, zu der die Standard-Benachrichtigung zu senden ist, eine Telefonnummer der folgenden Struktur an:

X = ServiceAccessCode + Teilnehmerrufnummer

Der ServiceAccessCode kann aus dem Rufnummernvorrat für Mehrwertdienste so gewählt werden, dass die normalen Routingfunktionen des SS7-Netzes -bei entsprechender Administration- die Benachrichtigungen aller Server zu der in dem MWI-Koordinationsserver realisierten Dienstelogik führen, die der Telefonnetzbetreiber für den neuen Zusatzdienst "Koordinierung von Benachrichtigungen über Message-Waiting" einsetzt. Diese Dienstelogik kann die Nachrichten aller Server auswerten und die Teilnehmervermittlungsstelle so steuern, dass Fehlanzeigen ausgeschlossen werden.

Darüberhinaus kann der Koordinierungsdienst folgende Dienstfeatures unterstützen:

a) Der Teilnehmer wählt die Dienstrufnummer X, wird mit der Dienstelogik verbunden, die ihm über intelligente Ansagefunktionen nähere Informationen über die vorliegenden Nachrichten gibt. Nach erfolgter Ansage kann die Dienstelogik ggf. die Teilnehmervermittlungsstelle so steuern, dass die Anzeige am Endgerät verschwindet.
b) Die Dienstelogik kann zusätzlich oder alternativ zu eigenen Ansagefunktionen dem Teilnehmer anbieten, ihn direkt zu den Abfragefunktionen des Servers zu verbinden, von dem eine Benachrichtigung vorliegt.
c) Die Dienstelogik kann ggf. über andere Schnittstellen (z.B. POP3 oder IMAP4 über IP, d.h. der MWI-Koordinationsserver fragt die Emailserver über IP ab, ob neue Emails angekommen sind, und setzt in einem solchen Falle die MWI-Nachricht selbst auf) auch solche Mail-Server in ihre Koordinierungsfunktion einbinden, die nicht das standardisierte Benachrichtigungsverfahren "Message Waiting Indication" verwenden.

Vorteile:

Die vorgeschlagene Lösung ist kostengünstig mit bestehender Netz-Technik zu realisieren und erfordert keine Eingriffe in die Vermittlungsstellen.

Welcher Gedanke liegt der Erfindung zugrunde ?

Die Erfindung liegt der Gedanke einer neuen netzseitigen Dienstelogik (Koordinierungsdienst) zugrunde. Diese neue Dienstlogik kann in den standardisierten Dienst "Message-Waiting-Indication" eingebunden sein, und zwar durch eine spezielle Dienstrufnummer unter Ausnutzung der normalen Routingfunktionen des SS7-Signalisierungsnetzes.

Verwendete Abkürzungen:

| | |
|---|---|
| IMAP4: | Internet Message Access Protokoll Version 4 |
| IP: | Internet Protokoll |
| ISP: | Internet Service Provider |
| MWI: | Message-Waiting-Indication |
| POP3: | Post Office Protokoll Version 3 |
| VST: | Vermittlungsstelle |

**Patentansprüche**

1. Verfahren für die Koordinierung der Anzeige bezüglich in Mailboxen vorliegender Nachrichten, demgemäß Anzeigemeldungen, die das Vorliegen von Nachrichten für einen Teilnehmer in Mailboxen anzeigen, von den betreffenden Mailboxen an eine Diensteinrichtung eines Telefonnetzes gesendet werden, durch die sie ausgewertet werden und durch die in Abhängigkeit davon ein Anzeigemittel für das Vorliegen von Nachrichten im Endgerät des Teilnehmers gesteuert wird.

2. Verfahren nach Anspruch 1,
**dadurch gekennzeichnet, daß**
dem Teilnehmer von der genannten Diensteinrichtung auf Anforderung durch Auswertung der genannten Anzeigemeldungen nähere Informationen über die vorliegenden Nachrichten gegeben werden.

3. Verfahren nach einem der Ansprüche 1 oder 2,
**dadurch gekennzeichnet, daß**
der Teilnehmer durch die genannte Diensteinrichtung auf Anforderung direkt mit den Abfragefunktionen des Mailbox-Servers einer angeforderten Nachricht verbunden wird.

4. Verfahren nach einem der Ansprüche 1 bis 3,
**dadurch gekennzeichnet, daß**
für das Senden der genannten Anzeigemeldungen an die genannte Diensteinrichtung das Verfahren gemäß dem Standarddienst "Message-Waiting-Indication" nach ETSI verwendet wird.

5. Verfahren nach einem der Ansprüche 1 bis 4,
**dadurch gekennzeichnet, daß**
das genannte Anzeigemittel von der Diensteinrichtung über die Vermittlungsstelle, an der das Endgerät des Teilnehmers angeschlossen ist, gesteuert wird.

6. Diensteinrichtung eines Telefonnetzes, die Anzeigemeldungen über Nachrichten, die in Mailboxen für einen Teilnehmer des Telefonnetzes vorliegen, empfängt, auswertet und in Abhängigkeit davon ein Anzeigemittel im Endgerät des Teilnehmers steuert.

7. Diensteinrichtung nach Anspruch 6,
**dadurch gekennzeichnet, daß**
sie dem Teilnehmer auf Anforderung durch Auswertung der genannten Anzeigemeldungen nähere Informationen über die vorliegenden Nachrichten sendet.

8. Diensteinrichtung nach einem der Ansprüche 6 oder 7,
**dadurch gekennzeichnet, daß**
sie den Teilnehmer auf Anforderung direkt mit den Abfragefunktionen des Mailbox-Servers einer angeforderten Nachricht verbindet.

9. Diensteinrichtung nach einem der Ansprüche 6 bis 8,
**dadurch gekennzeichnet, daß**
sie das genannte Anzeigemittel über die Vermittlungsstelle, an der das Endgerät des Teilnehmers angeschlossen ist, steuert.

MWI-
Koordinationsserver

Email-
Server 3

PO P3/IM A P4
(IP)

Teilnehmer-VST

VST

Teilnehmer

MWI (SS7)

MWI (ISDN
oder analog)

VST

MWI (SS7)

Email-
Server 1

MWI

MWI

Email-
Server 2

**Europäisches Patentamt**

## EUROPÄISCHER RECHERCHENBERICHT

Nummer der Anmeldung

EP 01 10 9765

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 845 894 A (BOSTON TECH INC) 3. Juni 1998 (1998-06-03) * Spalte 2, Zeile 3 - Spalte 15, Zeile 41 * * Zusammenfassung; Abbildungen 3,4,6 * | 1-9 | H04M3/533 H04M3/537 H04L12/58 |
| X | US 4 837 798 A (OSTERWEIL JANIS R  ET AL) 6. Juni 1989 (1989-06-06) * Zusammenfassung; Abbildungen 1,2,6-9,11,12,15 * * Spalte 1, Zeile 6 - Spalte 10, Zeile 6 * | 1-9 | |
| X | WO 00 67436 A (INFOACTIVE INC) 9. November 2000 (2000-11-09) * Zusammenfassung; Abbildungen 1-7,9 * * Seite 1, Zeile 3 - Seite 21, Zeile 25 * | 1-9 | |
| A | PATEL A ET AL: "A technique for multi-network access to multimedia messages" , COMPUTER COMMUNICATIONS, ELSEVIER SCIENCE PUBLISHERS BV, AMSTERDAM, NL, VOL. 20, NR. 5, PAGE(S) 324-337 XP004126688 ISSN: 0140-3664 * das ganze Dokument * | 1-9 | **RECHERCHIERTE SACHGEBIETE (Int.Cl.7)** H04L H04M |

Der vorliegende Recherchenbericht wurde für alle Patentansprüche erstellt

| Recherchenort | Abschlußdatum der Recherche | Prüfer |
|---|---|---|
| MÜNCHEN | 15. Oktober 2001 | Teiwes, J |

**ANHANG ZUM EUROPÄISCHEN RECHERCHENBERICHT
ÜBER DIE EUROPÄISCHE PATENTANMELDUNG NR.**                     EP 01 10 9765

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-10-2001

| Im Recherchenbericht angeführtes Patentdokument | | Datum der Veröffentlichung | Mitglied(er) der Patentfamilie | | Datum der Veröffentlichung |
|---|---|---|---|---|---|
| EP 0845894 | A | 03-06-1998 | US | 6233318 B1 | 15-05-2001 |
| | | | CA | 2220317 A1 | 05-05-1998 |
| | | | EP | 0845894 A2 | 03-06-1998 |
| | | | JP | 10233801 A | 02-09-1998 |
| US 4837798 | A | 06-06-1989 | CA | 1261493 A1 | 26-09-1989 |
| | | | CA | 1270584 B | 19-06-1990 |
| | | | CN | 87103996 A ,B | 24-02-1988 |
| | | | DE | 3769766 D1 | 06-06-1991 |
| | | | EP | 0270604 A1 | 15-06-1988 |
| | | | JP | 2568602 B2 | 08-01-1997 |
| | | | JP | 63503502 T | 15-12-1988 |
| | | | KR | 9206574 B1 | 08-08-1992 |
| | | | WO | 8707801 A1 | 17-12-1987 |
| WO 0067436 | A | 09-11-2000 | AU | 4694800 A | 17-11-2000 |
| | | | WO | 0067436 A1 | 09-11-2000 |

Für nähere Einzelheiten zu diesem Anhang : siehe Amtsblatt des Europäischen Patentamts, Nr.12/82